# DEMANDE DE BREVET EUROPEEN

(11) **EP 4 283 864 A1**
(43) Date de publication de la demande: **29.11.2023**
(21) Numéro de dépôt: 23174585.2
(22) Date de dépôt: 22.05.2023
(51) Int. Cl.: H02S 40/38, E06B 9/68, F24S 25/634, E06B 9/17

(54) **SYSTÈME DE PANNEAU PHOTOVOLTAÏQUE COMPORTANT DES MOYENS DE FIXATION DÉFORMABLE**

(30) Priorité: 25.05.2022 FR 2205026
(71) Demandeur: Delta Dore, 35270 Bonnemain (FR)
(72) Inventeur: EVEN, Nicolas, 35270 BONNEMAIN (FR); MONTIER, François, 35270 BONNEMAIN (FR)
(74) Mandataire: Cabinet Le Guen Maillet

(57) **Abrégé**

L'invention concerne un système de panneau photovoltaïque comportant un panneau photovoltaïque présentant un dos et une face avant opposée au dos et portant des cellules photovoltaïques, et au moins un moyen de fixation (156), où chaque moyen de fixation (156) comporte une base (200) fixée au dos et au moins une dent (210) fixée de manière élastique à la base (200) où chaque dent (210) est disposée à l'extérieur de la base (200) et se projette à l'opposé de la base (200), où chaque dent (210) est arrangée de manière à ce qu'un espace existe entre la dent (210) et le dos.

## Description

### DOMAINE TECHNIQUE

La présente invention se rapporte au domaine des volets roulants électriques et, en particulier, à un système de panneau photovoltaïque comportant un panneau photovoltaïque destiné à alimenter électriquement ledit volet roulant électrique et des moyens de fixation déformables assurant la fixation du panneau photovoltaïque au coffre du volet roulant. La présente invention concerne également un coffre de volet roulant équipé d'un tel système de panneau photovoltaïque.

### ÉTAT DE LA TECHNIQUE ANTÉRIEURE

Un volet roulant comporte classiquement un coffre dans lequel est enroulé le volet. Il est classique qu'un tel volet roulant soit électrique, c'est-à-dire qu'il comporte un moteur électrique qui assure l'enroulage du volet dans le coffre et le déroulage du volet sous le coffre pour obturer une ouverture telle qu'une porte ou une fenêtre.

Pour alimenter électriquement le moteur électrique, il est connu de fixer un panneau photovoltaïque à l'extérieur du coffre. Une telle fixation est généralement assurée par des rivets qui traversent le panneau photovoltaïque pour se fixer dans la paroi du coffre. Pour permettre le passage du rivet à travers le panneau photovoltaïque, il est nécessaire de prévoir un pourtour dépourvu de cellules photovoltaïques où un trou peut être réalisé.

Un tel montage nécessite donc que le panneau photovoltaïque présente une surface périphérique qui n'est pas utile à la production d'électricité, ce qui augmente sa surface et le rend donc moins discret. En outre, la présence d'un rivet traversant peut engendrer un écoulement d'eau dans le coffre si le montage est mal réalisé.

### EXPOSÉ DE L'INVENTION

Un objet de la présente invention est de proposer un système de panneau photovoltaïque comportant un panneau photovoltaïque destiné à alimenter électriquement un volet roulant électrique et des moyens de fixation assurant la fixation du panneau photovoltaïque au coffre du volet roulant de manière discrète et étanche.

À cet effet, est proposé un système de panneau photovoltaïque comportant :
- un panneau photovoltaïque présentant un dos et une face avant opposée au dos et portant des cellules photovoltaïques, et
- au moins un moyen de fixation, où chaque moyen de fixation comporte une base fixée au dos et au moins une dent fixée de manière élastique à la base où chaque dent est disposée à l'extérieur de la base et se projette à l'opposé de la base, où chaque dent est arrangée de manière à ce qu'un espace existe entre une surface inférieure de la dent et le dos,
où le système de panneau photovoltaïque comporte un câble électriquement connecté aux cellules photovoltaïques, et la base présente un passage à travers lequel passe le câble.

Avantageusement, pour chaque dent, le moyen de fixation comporte un bras avec une extrémité proximale solidaire de la base et une extrémité distale qui porte ladite dent.

Avantageusement, l'extrémité distale de chaque bras est libre.

Avantageusement, la base est de forme cylindrique et chaque bras prend une forme arquée et coaxiale autour de la base.

Avantageusement, chaque dent présente du côté opposé à l'espace, un plan incliné qui s'évase en se rapprochant de l'espace.

Avantageusement, pour chaque dent, il y a deux surfaces inférieures qui sont à des hauteurs différentes.

L'invention propose également un coffre de volet roulant comportant une paroi frontale avec une face intérieure orientée vers l'intérieur du coffre de volet roulant et une face extérieure orientée vers l'extérieur et en regard du dos et un système de panneau photovoltaïque selon l'une des variantes précédentes, où pour chaque moyen de fixation, la paroi frontale présente un alésage dans lequel logent la base et chaque dent dudit moyen de fixation, où la paroi frontale est dans l'espace et où chaque dent est positionnée contre la face intérieure de la paroi frontale.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une représentation schématique d'un coffre de volet roulant selon l'invention,
Fig. 2 est une vue de dessous d'un système de panneau photovoltaïque selon l'invention,
Fig. 3 est une vue en coupe du système de panneau photovoltaïque de la Fig. 1 selon le plan P,
Fig. 4 est une vue en coupe similaire à celle de la Fig. 2 sous un autre angle,
Fig. 5 est une vue en perspective du moyen de fixation selon l'invention, et
Fig. 6 est une vue en perspective du moyen de fixation selon l'invention selon un autre angle.

### EXPOSÉ DÉTAILLÉ DE MODES DE RÉALISATION

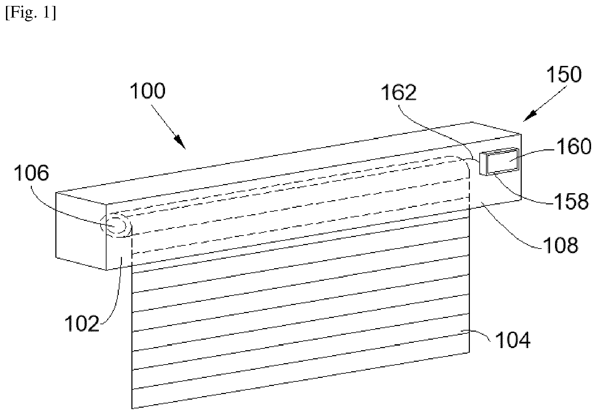

La Fig. 1 montre un coffre de volet roulant 100 dans lequel est agencé un volet roulant 104 équipé d'un moteur électrique 106, classiquement un moteur tubulaire. Le volet roulant 104 est entraîné par le moteur électrique 106 et il peut se déployer verticalement de manière à obturer une ouverture telle qu'une porte ou une fenêtre ou s'enrouler dans le coffre de volet roulant 100 lorsqu'il est rangé.

Le coffre de volet roulant 100 comporte au moins une paroi frontale 102 qui est verticale et qui présente une face intérieure orientée vers l'intérieur du coffre de volet roulant 100 et une face extérieure 108 orientée vers l'extérieur et portant un système de panneau photovoltaïque 150 selon l'invention.

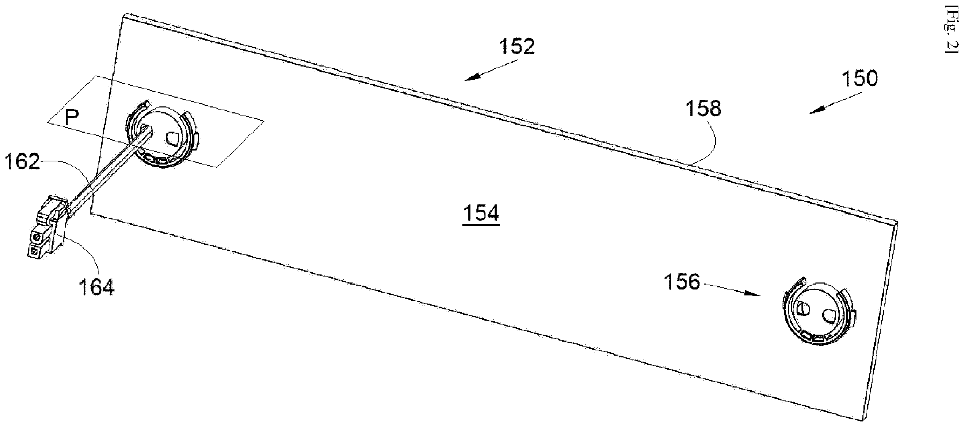

La Fig. 2 montre le système de panneau photovoltaïque 150 qui comporte un panneau photovoltaïque 152 qui est ici de forme rectangulaire et présente un dos 154 et des moyens de fixation 156 qui sont ici au nombre de deux. D'une manière générale, il y a au moins un moyen de fixation 156 solidaire du dos 154. Chaque moyen de fixation 156 assure la fixation du panneau photovoltaïque 152 à la paroi frontale 102.

Le panneau photovoltaïque 102 présente également une face avant 158 qui est la face opposée au dos 104 et qui porte des cellules photovoltaïques 160.

Le dos 154 est en regard de la face extérieure 108 de manière à ce que les cellules photovoltaïques 160 soient orientées vers l'extérieur pour pouvoir capter la lumière extérieure et ainsi générer un courant électrique.

Le système de panneau photovoltaïque 150 comporte également un câble 162 qui assure l'alimentation électrique du moteur électrique 106 depuis les cellules photovoltaïques 160 et qui est donc électriquement connecté entre les cellules photovoltaïques 160 et le moteur électrique 106. Dans le mode de réalisation de l'invention présenté ici, la connexion au moteur électrique 106 s'effectue par un connecteur 164.

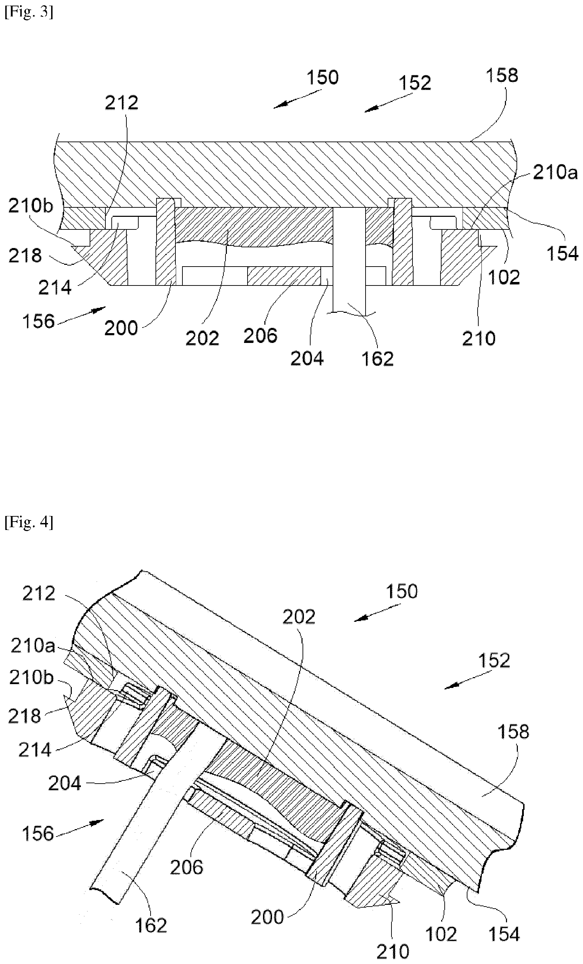

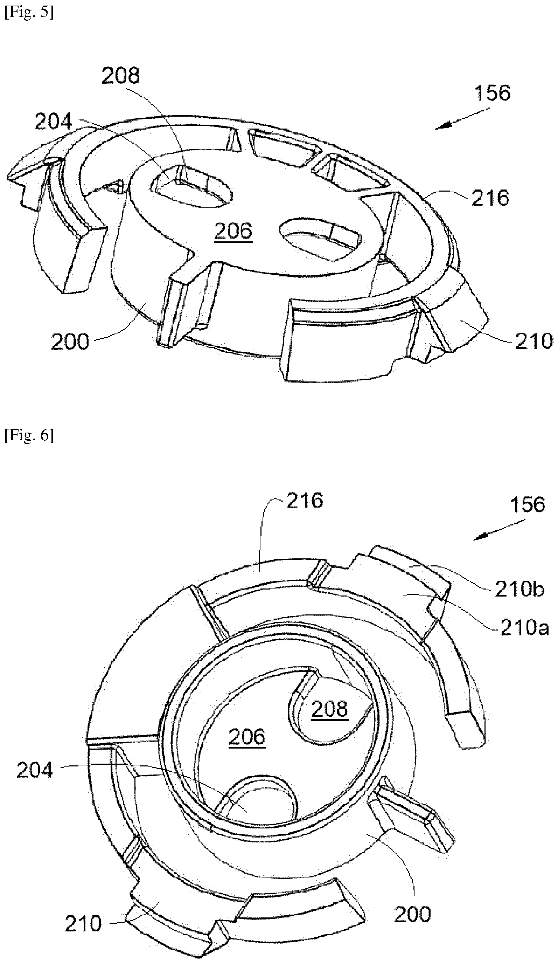

Les Figs. 3 et 4 montrent une coupe du système de panneau photovoltaïque 150 et les Figs. 5 et 6 montrent un moyen de fixation 156.

Le moyen de fixation 156 comporte une base 200, ici de forme cylindrique, qui se fixe au dos 154 par exemple par dépose d'une résine 202 type époxy, ici à l'intérieur de la forme cylindrique.

La base 200 présente un passage 204 qui permet le passage du câble 162. Dans le mode de réalisation de l'invention présenté ici, la base 200 présente un fond 206 qui est en travers de l'espace intérieur de la forme cylindrique et qui est percé de deux trous 208 réalisant chacun un passage 204.

Le moyen de fixation 156 comporte également au moins une dent 210 fixée de manière élastique à la base 200 où chaque dent 210 est disposée à l'extérieur de la base 200 et se projette à l'opposé de la base 200. Il y a préférentiellement deux dents diamétralement opposées. La fixation élastique permet une déformation élastique de la dent 210 qui revient dans sa position initiale sans être détériorer ou casser lorsque les forces extérieures disparaissent.

Chaque dent 210 est arrangée de manière à ce qu'un espace 214 existe entre une surface inférieure 210a-b de la dent 210 et le dos 154, c'est-à-dire que chaque dent 210 est à distance du dos 154. La surface inférieure 210a-b est parallèle au dos 154 et en regard du dos 154.

Pour chaque moyen de fixation 156, la paroi frontale 102 présente un alésage 212 qui permet le passage du moyen de fixation 156 de manière à positionner la base 200 et chaque dent 210 dans l'alésage 212 et de manière à ce que la surface inférieure 210a-b de chaque dent 210 se positionne contre la face intérieure de la paroi frontale 102. La paroi frontale 102 vient alors se placer dans l'espace 214 et se trouve prise en sandwich entre le dos 154 et chaque dent 210, assurant ainsi la fixation du panneau photovoltaïque 152 sur la paroi frontale 102.

Une telle fixation est ainsi simple à mettre en oeuvre et ne nécessite pas de percer le panneau photovoltaïque 152 pour y placer des rivets par exemple.

Du fait de la fixation élastique de chaque dent 210, chaque dent 210 se rapproche de la base 200 lorsqu'elle est introduite dans l'alésage 212 de la paroi frontale 102 et s'écarte pour revenir à sa position initiale lorsque la dent 210 est passée au-delà de la paroi frontale 102 qui est alors dans l'espace 214.

Pour chaque dent 210, le moyen de fixation 156 comporte un bras 216 avec une extrémité proximale solidaire de la base 200 et une extrémité distale qui porte ladite dent 210. L'extrémité distale de chaque bras 216 est libre, c'est-à-dire qu'elle n'est pas fixée, et peut donc librement se déplacer dans la limite de l'élasticité au niveau du l'extrémité proximale.

Dans le mode de réalisation de l'invention présenté sur les Figs. 3 à 6, chaque dent 210 présente deux surfaces inférieures 210a-b qui sont à des hauteurs différentes. Il y a ainsi une première surface inférieure 210a qui est plus près du dos 154 et une deuxième surface inférieure 210b qui est à l'extérieur de la première surface inférieure 210a et qui est plus loin du dos 154. Un tel arrangement permet d'adapter la fixation à des épaisseurs différentes de la paroi frontale 102. Si l'épaisseur de la paroi frontale 102 est moindre, elle se placera sous la surface inférieure 210a et si l'épaisseur de la paroi frontale 102 est plus importante, elle se placera sous la surface inférieure 210b. L'espace 214 peut ainsi avoir différentes hauteurs.

Chaque dent 210 peut se déplacer radialement.

Chaque bras 216 prend une forme arquée et coaxiale autour de la base 200 cylindrique.

Pour faciliter le rapprochement de la dent 210 lors de l'introduction dans l'alésage 212, la dent 210 présente du côté opposé à l'espace 212, c'est-à-dire opposé à la surface inférieure 210a-b, un plan incliné 218 qui s'évase en se rapprochant de l'espace 212. Ce plan incliné 218 permet le glissement lors de la mise en place.

## Revendications

1. Système de panneau photovoltaïque (150) comportant :
- un panneau photovoltaïque (152) présentant un dos (154) et une face avant (158) opposée au dos (154) et portant des cellules photovoltaïques (160), et
- au moins un moyen de fixation (156), où chaque moyen de fixation (156) comporte une base (200) fixée au dos (154) et au moins une dent (210) fixée de manière élastique à la base (200) où chaque dent (210) est disposée à l'extérieur de la base (200) et se projette à l'opposé de la base (200), où chaque dent (210) est arrangée de manière à ce qu'un espace (214) existe entre une surface inférieure (210a-b) de la dent (210) et le dos (154),
le système de panneau photovoltaïque (150) étant **caractérisé en ce qu'**il comporte un câble (162) électriquement connecté aux cellules photovoltaïques (160), et **en ce que** la base (200) présente un passage (204) à travers lequel passe le câble (162).

2. Système de panneau photovoltaïque (150) selon la revendication 1, **caractérisé en ce que** pour chaque dent (210), le moyen de fixation (156) comporte un bras (216) avec une extrémité proximale solidaire de la base (200) et une extrémité distale qui porte ladite dent (210).

3. Système de panneau photovoltaïque (150) selon la revendication 2, **caractérisé en ce que** l'extrémité distale de chaque bras (216) est libre.

4. Système de panneau photovoltaïque (150) selon l'une des revendications 2 ou 3, **caractérisé en ce que** la base (200) est de forme cylindrique et **en ce que** chaque bras (216) prend une forme arquée et coaxiale autour de la base (200).

5. Système de panneau photovoltaïque (150) selon l'une des revendications 1 à 4, **caractérisé en ce que** chaque dent (210) présente du côté opposé à l'espace (212), un plan incliné (218) qui s'évase en se rapprochant de l'espace (212).

6. Système de panneau photovoltaïque (150) selon l'une des revendications 1 à 5, **caractérisé en ce que** pour chaque dent (210), il y a deux surfaces inférieures (210a-b) qui sont à des hauteurs différentes.

7. Coffre de volet roulant (100) comportant une paroi frontale (102) avec une face intérieure orientée vers l'intérieur du coffre de volet roulant (100) et une face extérieure (108) orientée vers l'extérieur et en regard du dos (154) et un système de panneau photovoltaïque (150) selon l'une des revendications précédentes, où pour chaque moyen de fixation (156), la paroi frontale (102) présente un alésage (212), dans lequel logent la base (200) et chaque dent (210) dudit moyen de fixation (156), où la paroi frontale (102) est dans l'espace (214) et où chaque dent (210) est positionnée contre la face intérieure de la paroi frontale (102).
